# EUROPEAN PATENT SPECIFICATION

(11) **EP 2 159 033 B1**
(45) Date of publication and mention of the grant of the patent: **27.11.2013**
(21) Application number: 09010736.8
(22) Date of filing: 20.08.2009
(51) Int. Cl.: B29C 45/26, B29C 45/37

(54) **Disk molding mold, outer peripheral ring, disk substrate, and method of molding disk substrate**
Scheibenformwerkzeug, äußerer Umfangsring, Scheibensubstrat und Verfahren für das Formen des Scheibensubstrats
Moule de moulage de disque, anneau périphérique extérieur, substrat de disque et procédé de moulage du substrat de disque

(30) Priority: 27.08.2008 JP 2008218487
(43) Date of publication of application: 03.03.2010
(73) Proprietor: Sumitomo Heavy Industries, Ltd., Tokyo 141-6025 (JP); SEIKOH GIKEN CO., LTD., Matsudo-shi, Chiba 270-2214 (JP)
(72) Inventor: Suzuki, Yasuo, Chiba-shi Chiba 263-0001 (JP); Hirano, Hideomi, Chiba-shi Chiba 263-0001 (JP); Oike, Makoto, Matsudo-shi Chiba 270-2214 (JP); Yokota, Shouji, Tokyo 108-8415 (JP)
(74) Representative: Wagner, Karl H.

(56) References cited:
- JP-A- 4 226 318
- JP-A- 8 244 038
- JP-A- 9 123 229
- JP-A- 2002 283 405
- JP-A- 2006 107 555

## Description

### BACKGROUND OF THE INVENTION

### Field of the Invention

The present invention relates to a disk molding mold, an outer peripheral ring, a disk substrate, and a method of molding the disk substrate.

### Description of the Related Art

In the past, in a molding machine, for example, an injection molding machine for molding a disk substrate, a disk substrate was formed in such a manner that a resin heated and melted inside a heating cylinder was filled into a cavity of a disk molding mold, and was cooled and solidified inside the cavity.

For this reason, the injection molding machine includes a disk molding mold which has a fixed-side mold assembly and a movable-side mold assembly, an injection device which injects a resin into a cavity, and a mold clamping device which allows the movable-side mold assembly to move close to or away from the fixed-side mold assembly. Then, when the movable-side mold assembly is reciprocated by the mold clamping device, a mold closing operation, a mold clamping operation, and a mold opening operation of the disk molding mold are performed. During the mold clamping operation, the cavity is formed between a disk plate of the fixed-side mold assembly and a disk plate of the movable-side mold assembly.

In addition, the injection device includes a heating cylinder, an injection nozzle which is mounted to the front end of the heating cylinder, and a screw which is disposed inside the heating cylinder so as to be rotatable and movable in a reciprocating manner.

Further, in a measuring process, the screw rotates, a melted resin is collected in front of the screw, and then the screw retreats. At this time, the mold closing operation and the mold clamping operation of the disk molding mold are performed. Subsequently, in an injection process, the screw advances, and the resin collected in front of the screw is injected from the injection nozzle so as to be filled into the cavity via a sprue of the disk molding mold. Then, in a cooling process, the resin filled inside the cavity is cooled, and perforating is performed thereon, thereby forming the disk substrate. Subsequently, the mold opening operation is performed so as to extract the disk substrate.

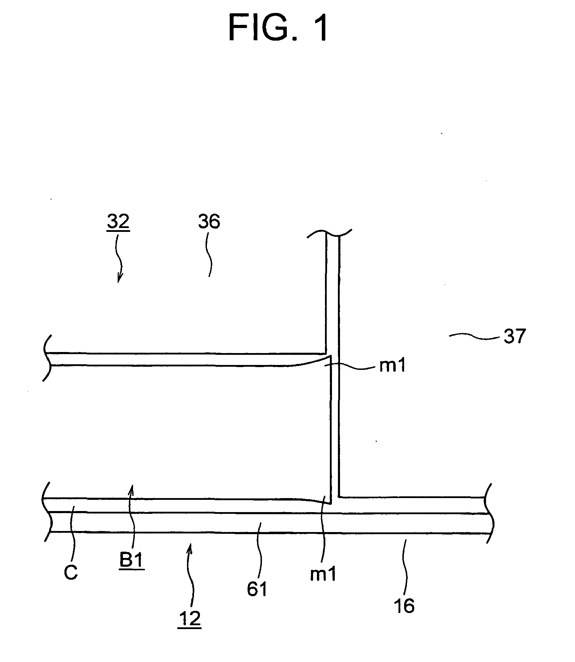

Fig. 1 is a conceptual diagram showing a main part of a known disk molding mold.

In the drawing, the reference numeral 12 denotes a fixed-side mold assembly, the reference numeral 32 denotes a movable-side mold assembly, and the mold assemblies 12 and 32 constitute a disk molding mold. In addition, the reference numerals 16 and 36 denote disk plates.

In the fixed-side mold assembly 12, the disk plate 16 is equipped with a stamper 61 which forms a minute pattern on a data writing surface, that is, an information surface of a disk substrate B1. In addition, in the movable-side mold assembly 32, a cavity ring 37 as an outer peripheral ring is mounted to the disk plate 36, and the outer peripheral edge of the cavity C is formed by the cavity ring 37.

Incidentally, the resin filled in the cavity C is supplied to a gate (not shown) formed at the center of the cavity C, and flows inside the cavity C in the outer radial direction. However, at this time, since the outer peripheral edge of the disk molding mold contacts with an atmosphere, a temperature of the resin in the vicinity of the outer peripheral edge of the cavity C becomes lower than that of the resin in other parts thereof, and a flow layer (core layer) having the melted resin does not sufficiently extend to the outer peripheral edge of the cavity C. As a result, the resin in the vicinity of the outer peripheral edge is solidified in a high density state, and the resin in other parts is solidified in a low density state.

Accordingly, when the mold opening operation is performed and the entire disk substrate B1 is cooled, a contraction amount of the resin is small in the vicinity of the outer peripheral edge of the cavity C by a degree corresponding to the high density state, and a contraction amount thereof is large in other parts of the cavity C by a degree corresponding to the low density state, thereby causing a contraction difference therebetween. As a result, the disk substrate B1 is bent in the peripheral direction, and a plane degree of the disk substrate B1 reduces. For this reason, the quality of the disk substrate B1 deteriorates, and the quality of a product, for example, an optical disk formed by the disk substrate B1 deteriorates.

In addition, the outer peripheral edge of the disk substrate B1 slightly protrudes in the axial direction to thereby form a protruding portion (ski-jump portion) ml. When an optical disk such as a blue-ray disk is formed by laminating a reflection film, a cover layer (light transmitting layer), and the like on the disk substrate B1, a protruding portion which is the protruding portion ml is formed in the optical disk. For this reason, a reading head, a recording head, or the like of an AV device or the like may contact with the protruding portion of the optical disk when the optical disk is set on the AV device or the like to read data (information) therefrom and to write data therein.

In addition, when the cover layer is laminated by a spin coating method, liquid is collected in the outer peripheral edge of the optical disk, and hence the protruding portion is further formed in the optical disk.

For this reason, there is known a disk molding mold which makes the cavity C thin and prevents the outer peripheral edge of the disk substrate B1 from protruding in such a manner that a stepped portion is formed in the outer peripheral edge of the cavity C of the disk molding mold, and the stamper 61 is disposed on the stepped portion (for example, see JP-A-2003-11180).

In addition, there is known a disk molding mold which prevents the protruding portion m1 from being formed in the outer peripheral edge of the disk substrate B1 in such a manner that a temperature of the cavity ring 37 is controlled so as to reduce a temperature difference between the cavity ring 37 and the disk plate 36 and to prevent a temperature of the resin in the vicinity of the outer peripheral edge of the cavity C from being lower than that of the resin in other parts of the cavity C.

However, in the known disk molding molds, since the rear surface of the stamper 61 contacts with the stepped portion, the rear surface of the stamper 61 is abraded due to the repeated molding operation, and hence the durability of the stamper 61 deteriorates. As a result, the durability of the disk molding mold deteriorates.

In addition, in the case of controlling the temperature of the cavity ring 37, a cost of the disk molding mold increases. JP 2002-283405 A discloses a mold assembly for molding an optical disk. In order to make it possible to discharge the air in a product cavity to the outside from the gap between retaining molds at the time of filling of the cavity with a resin to prevent the protrusion of the resin from the gap, the gap between an outer periphery ring and a stamper and the gap with the core block of the outer periphery ring function as gas vents when the product cavity is filled with the resin but, when the mold clamping force of a fixed mold and a movable mold is increased, an annular groove part is filled with the compressed resin to prevent the protrusion of the resin from the gap. The projection formed to the outer peripheral edge of an optical disk by the annular groove part gets away from the annular groove part by the shrink of the resin and the projection is not hooked with the outer periphery ring at the time of release of the optical disk.

JP 2006-107555 A discloses a mold device for molding an optical disk. In order to heighten gas degassing properties when resin is packed, in a mold device for molding an optical disk, which is provided with an outer peripheral ring for molding an outer peripheral surface of the optical disk, a fixed mold and a movable mold are clamped to form a product cavity for forming the optical disk between the mold bodies and a thermoplastic molding material is packed in the product cavity. The movable mold is provided with the outer peripheral ring for forming the outer peripheral surface of the optical disk. An inner peripheral surface part for molding facing the product cavity is provided on one side in an axial direction of an inner peripheral surface of the outer peripheral ring. A recessed part for degassing gas is provided on the other side in the axial direction of the inner peripheral surface. Gas passed through a gap when the resin is packed is passed through a part whose gap is made larger than the gap by the recessed part for degassing gas in the vicinity of an interval to be satisfactorily degassed.

JP 09-123229 A discloses a mold apparatus for molding a disk-like recording medium board and a molding method for the board using the mold apparatus. In order to attempt to prevent the transfer failure of an uneven pattern such as the pit or groove formed at a stamper and to perform the improvement in the productivity, the mold apparatus for molding a disk-like recording medium board comprises a fixed mold having a stamper mounted thereat, and a movable mold separably disposed oppositely at the mold to constitute a cavity for molding both the surfaces of the board. The apparatus further comprises an outer peripheral mold drivably contained in the outer peripheral mold container provided in the mold and opposed to the mold to mold the outer periphery of the board, and outer peripheral mold driving means for operating to separate the mold from the mold. The mold is held in the state opposed to the mold between the mold clamping step and the cooling step by the driving means, and operated to be separated from the mold preferentially to the mold opening operation of the mold on the way of the cooling step.

JP 08-244038 A discloses a mold apparatus for molding resin. In order to prevent the generation of mold release inferiority between an upper fixed mold and a molded product by providing the wall part of the cavity for forming the outer peripheral part of the molded product to a movable mold part and forming an undercut part to the wall part, an undercut part is formed to the circumferential part of a disc-shaped cavity, that is, the circumferential wall of the circumferential part of a movable mold. Therefore, a projection part is formed to the circumferential part of the molded product molded in the disk-shaped cavity corresponding to the undercut part and chamferring parts are formed on both sides of the projection part. The projection part of the molded product is engaged with the undercut part of the circumferential part of the movable mold. When the lower movable mold is moved, that is, a disc part and the circumferential part are moved by this engagement, the molded product is moved along with them and demolded from a stamper.

JP 04-226318 A discloses a molding die for a disk base. In order to upgrade the productivity of a base and improve the possibility of damage to a protection film of a recording medium using the molded base, an undercut is formed on a side face on which a cavity consisting of a stamper of a movable mold, a fixed mold and an outer peripheral ring, is formed, and corner flashes on the outermost periphery are generated on the positions on the inner side of the outermost peripheral edge of a base by the formed undercut. Also, it is not necessary to use a mask or the like for coating a reflection film to reduce the manhours.

The present invention solves the problems of the known disk molding molds, and an object of the invention is to provide a disk molding mold, an outer peripheral ring, a disk substrate, and a method of molding the disk substrate, the disk molding mold being capable of improving the quality of the disk substrate by preventing a protruding portion from being formed in an outer peripheral edge of the disk substrate and of reducing a cost of the disk molding mold by improving the durability of the disk molding mold.

According to the invention, a disk molding mold is provided as set forth in claim 1, an outer peripheral ring is provided as set forth in claim 7, a disk substrate is provided as set forth in claim 8, and a method of molding a disk substrate is provided as set forth in claim 9. Preferred embodiments of the present invention may be gathered from the dependent claims.

The concave portion having a depth in the range of 50 (µm) to 150 (µm) is formed in a portion of the inner peripheral surface of the outer peripheral ring forming the cavity.

In this case, since the concave portion having a depth in the range of 50 (µm) to 150 (µm) is formed in a portion of the inner peripheral surface of the outer peripheral ring forming the cavity, a flow layer of a molding material filled inside the cavity extends in the outer radial direction by a degree corresponding to the concave portion, and the molding material in the vicinity of the outer peripheral edge of the cavity C and the molding material in other parts thereof are solidified in the substantially same density state.

As a result, it is possible to prevent the protruding portion from being formed in the outer peripheral edge of the disk substrate. Also, since it is possible to reduce the peripheral bent amount of the disk substrate, it is possible to improve the plane degree of the disk substrate, and thus to improve the quality of the disk substrate.

Further, since it is not necessary to form a stepped portion on the rear surface of the stamper in order to prevent the protruding portion from being formed in the outer peripheral edge of the disk substrate, the rear surface of the stamper is not abraded due to the repeated molding operation, and hence it is possible to improve the durability of the stamper. As a result, it is possible to improve the durability of the disk molding mold.

Furthermore, since it is not necessary to control the temperature of the outer peripheral ring in order to prevent the protruding portion from being formed in the outer peripheral edge of the disk substrate, it is possible to reduce the cost of the disk molding mold.

### BRIEF DESCRIPTION OF THE DRAWINGS

Fig. 1 is a conceptual diagram showing a main part of a known disk molding mold.
Fig. 2 is a partially cross-sectional view showing a disk molding mold according to the first embodiment of the invention.
Fig. 3 is an enlarged view showing a main part of the disk molding mold according to the first embodiment of the invention.
Fig. 4 is a conceptual diagram showing a disk substrate molding state according to a first embodiment of the invention.
Fig. 5 is an exploded diagram showing a first main part of the disk molding mold according to the first embodiment of the invention.
Fig. 6 is an exploded diagram showing a second main part of another disk molding mold
Fig. 7 is a cross-sectional view showing a main part of a disk substrate according to the first embodiment of the invention.
Fig. 8 is a diagram showing a relationship between a depth of a concave portion and a peripheral bent amount of the disk substrate according to the first embodiment of the invention.
Fig. 9 is a diagram showing a method of molding a blue-ray disk according to the first embodiment of the invention.
Fig. 10 is a diagram showing another method of molding the blue-ray disk according to the first embodiment of the invention.
Fig. 11 is a first diagram showing still another method of molding the blue-ray disk according to the first embodiment of the invention.
Fig. 12 is a second diagram showing still another method of molding the blue-ray disk according to the first embodiment of the invention.
Fig. 13 is an exploded diagram showing the main part of another disk molding mold.

### DETAILED DESCRIPTION OF THE INVENTION

Hereinafter, an embodiment of the invention will be described in detail with reference to the accompanying drawings. In this case, a disk molding mold for molding a disk substrate as a molded product will be exemplified.

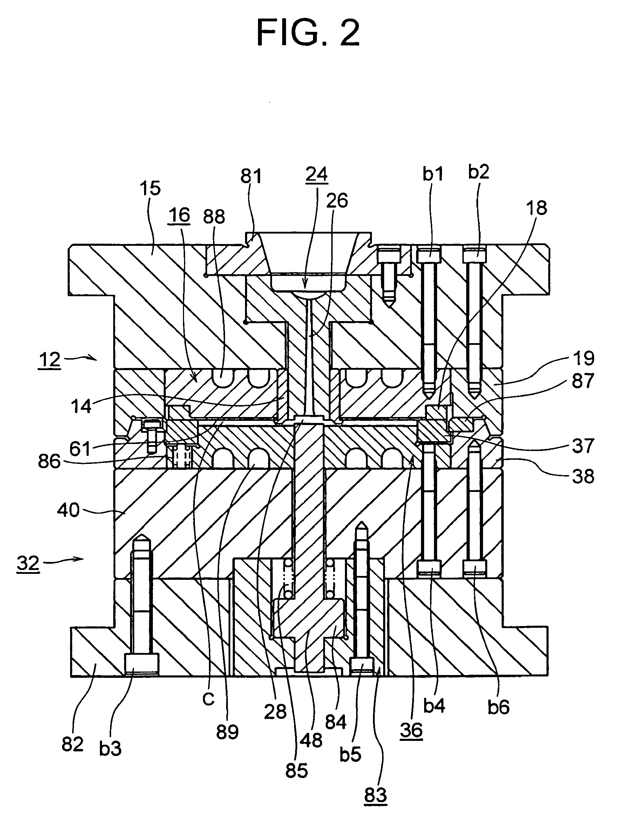

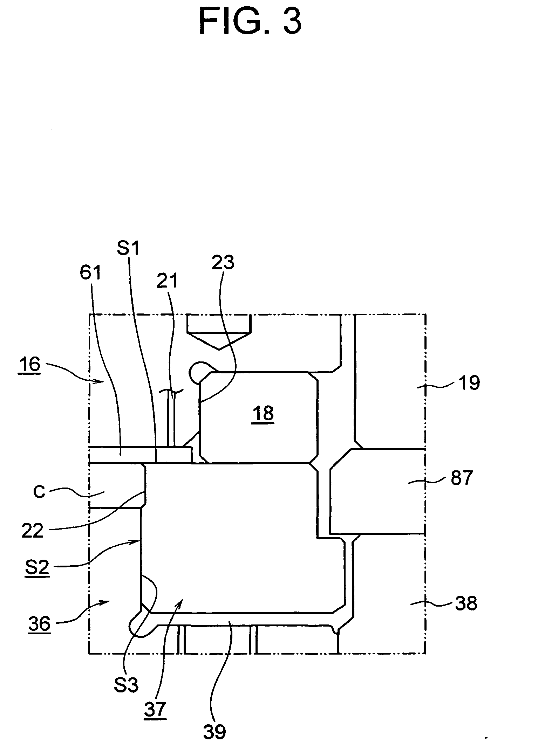

Fig. 2 is a partially cross-sectional view showing a disk molding mold according to the first embodiment of the invention. Fig. 3 is an enlarged view showing a main part of the disk molding mold according to the first embodiment of the invention.

In the drawing, the reference numeral 12 denotes a fixed-side mold assembly which is a first mold mounted to a fixed platen (not shown) as a first support plate through a bolt (not shown). The reference numeral 32 denotes a movable-side mold assembly which is a second mold mounted to a movable platen (not shown) as a second support plate through a bolt (not shown) and movable in a reciprocating manner together with the movable platen. The mold assemblies 12 and 32 constitute a mold device and a disk molding mold.

The mold assembly 12 includes a base plate 15 which is a first support plate, a disk plate 16 which is a first mirror plate mounted to the base plate 15 through a bolt b1, and a sprue bush 24 which is disposed adjacent to a locating ring 81. The front end (an end portion on the side of the mold assembly 32) of the sprue bush 24 is provided with a die 28 adjacent to a cavity C, and a sprue 26 is formed so as to communicate with a die 28. A resin (in the embodiment, polycarbonate), which is not shown in the drawing and is a molding material, is injected from an injection nozzle of an injection device (not shown) and is filled into the cavity C via the sprue 26.

In addition, the injection device includes a heating cylinder which is a cylinder member, an injection nozzle which is mounted to the front end of the heating cylinder, and a screw which is disposed inside the heating cylinder so as to be rotatable and movable in a reciprocating manner.

In addition, the disk plate 16 is equipped with a stamper 61 which forms a minute pattern including unevenness (a group, a pit, and the like) on an information surface of the disk substrate. An inner stamper holder 14 as a cylindrical member and a stamper fixing member is disposed on the outer radial side of the front half portion of the sprue bush 24 so as to hold the inner peripheral edge of the stamper 61 in a fixed state. In addition, a vacuum passageway 21 as a suction passageway is formed in the vicinity of the outer peripheral edge of the disk plate 16 so as to suck and hold the outer peripheral edge of the stamper 61. The vacuum passageway 21 is connected to a vacuum pump (not shown) as a negative pressure generating source via a control valve (not shown) or the like. Accordingly, a negative pressure is selectively formed inside the vacuum passageway 21 by opening or closing the control valve so that the outer peripheral edge of the stamper 61 is selectively held by the negative pressure. That is, the vacuum passageway 21 serves as an outer stamper holder for fixing the stamper.

In addition, an annular abutting ring 18 is mounted to the outer peripheral edge of the disk plate 16 through a bolt (not shown). For this reason, an annular notch 23 is formed in the outer peripheral edge of the diskplate 16, and the annular abutting ring 18 is disposed in the annular notch 23.

Further, an annular guide ring 19 as a first surrounding ring is disposed on the outer radial side of the disk plate 16 and the abutting ring 18 so as to be mounted to the base plate 15 through a bolt b2.

The mold assembly 32 includes a base plate 82, an intermediate plate 40 which is a second support plate mounted to the base plate 82 through a bolt b3, a disk plate 36 which is a second mirror plate mounted to the intermediate plate 40 through a bolt b4, a cylinder 83 which is disposed to abut on the movable platen inside the base plate 82 and is mounted to the intermediate plate 40 through a bolt b5, and a cut punch 48 which is a processing member disposed to be movable in a reciprocating manner along the cylinder 83 and having the front end (an end portion on the side of the mold assembly 12) formed in a shape corresponding to the shape of the die 28.

A flange 84 integrally formed with the rear end of the cut punch 48 is disposed inside the cylinder 83 so as to be movable in a reciprocating manner. A cut punch returning spring 85 as an urging member is disposed in front of the flange 84, and the flange 84 is urged backward by the cut punch returning spring 85.

In addition, an annular cavity ring 37 as an outer peripheral ring is disposed in the outer peripheral edge of the disk plate 36 so as to be movable relative to the disk plate 36 and to face the abutting ring 18. An annular guide ring 38 as a second surrounding ring is disposed on the outer radial side of the disk plate 36 and the cavity ring 37 so as to face the guide ring 19 and to be mounted to the intermediate plate 40 through a bolt b6. The cavity ring 37 is urged toward the mold assembly 12 by a spring 86 as an urging member and is movable relative to the disk plate 36.

The further advancing operation of the cavity ring 37 is regulated at an advance limit position by a cavity fixing member 87. The cavity ring 37 is disposed so as to protrude by an amount corresponding to a thickness of the disk substrate by a front end surface (an end surface on the side of the mold assembly 12) of the disk plate 36. During the mold clamping operation, a front end surface S1 as a contact surface facing the mold assembly 12 comes into contact with the stamper 61 and the abutting ring 18, and a part of the inner peripheral surface S2 forms the outer peripheral edge of the cavity C. In addition, an annular notch 39 is formed in the outer peripheral edge of the disk plate 36, and an outer peripheral surface S3 of the notch 39 slides on the cavity ring 37.

In addition, a mold clamping device (not shown) is disposed so as to allow the mold assembly 32 to move close to or away from the mold assembly 12. When a mold clamping cylinder as a mold clamping driving portion of the mold clamping device is driven so as to reciprocate the mold assembly 32, the mold closing operation, the mold clamping operation, and the mold opening operation of the disk molding mold are performed. During the mold clamping operation, the cavity C is formed between the disk plates 16 and 36.

Further, when a driving cylinder (not shown) as a perforating driving portion is driven so as to advance the flange 84 during the mold clamping operation, the cut punch 48 advances to enter the die 28. As a result, perforating is performed on the resin inside the cavity C.

The disk plates 16 and 36 are respectively provided with first and second temperature control passageways 88 and 89. A temperature control medium such as water, oil, or air is supplied to the first and second temperature control passageways 88 and 89 so as to cool the disk plates 16 and 36 by controlling a temperature thereof.

Further, in a measuring process, the screw rotates, the melted resin is collected in front of the screw, and then the screw retreats. At this time, the mold closing operation and the mold clamping operation of the diskmoldingmold are performed. Subsequently, in an injection process, the screw advances, and the resin collected in front of the screw is injected from the injection nozzle so as to be filled into the cavity C. Then, in a cooling process, the resin filled inside the cavity C is cooled, and the perforating is performed thereon, thereby forming the disk substrate. Subsequently, the mold opening operation is performed so as to extract the disk substrate.

Incidentally, the resin filled in the cavity C is supplied to a gate (not shown) formed at the center of the cavity C, and flows inside the cavity C in the outer radial direction. However, at this time, since the outer peripheral edge of the disk molding mold contacts with an atmosphere, the outer peripheral edge is cooled. Accordingly, in the case where a flow layer of the resin does not sufficiently extend to the outer peripheral edge of the cavity C, the resin in the vicinity of the outer peripheral edge is solidified in a high density state, and the resin of the other parts is solidified in a low density state.

Accordingly, when the mold opening operation is performed and the entire disk substrate is cooled, a protruding portion may be formed in the outer peripheral edge of the disk substrate or the disk substrate may be bent in the peripheral direction due to a contraction difference between the resin in the vicinity of the outer peripheral edge of the cavity C and the resin in other parts thereof. As a result, since a plane degree of the disk substrate reduces, the quality of a product, for example, an optical disk formed by the disk substrate deteriorates.

When an optical disk such as a blue-ray disk is formed by laminating a reflection film, a cover layer (light transmitting layer), and the like on the disk substrate, a protruding portion corresponding to the protruding portion is formed in the optical disk. When the optical disk is set on an AV device or the like to read out data therefrom or to write data therein, a reading head, a recording head, or the like of the AV device or the like may contact with the protruding portion of the optical disk.

Then, when the cover layer is laminated by a spin coating method, liquid may be collected in the outer peripheral edge of the optical disk, and hence the protruding portion may be further formed in the optical disk.

In addition, in the case where an optical disk such as a multilayer blue-ray disk is formed by laminating a reflection film, an intermediate layer, a half-reflection film, a cover layer, and the like on the disk substrate, the intermediate layer is pushed by an intermediate-layer stamper so as to form an information surface on the surface of the intermediate layer. However, since the intermediate layer is thin, the flow layer of the intermediate layer cannot sufficiently extend to the outer peripheral edge of the cavity C, a contraction difference between the resin in the vicinity of the outer peripheral edge of the cavity C and the resin in other parts becomes large, and the plane degree of the intermediate layer reduces, thereby further deteriorating the quality of the optical disk.

For this reason, in the embodiment, a concave portion 22 having a predetermined depth is formed at a predetermined portion of the inner peripheral surface S2 of the cavity ring 37 for forming the cavity C.

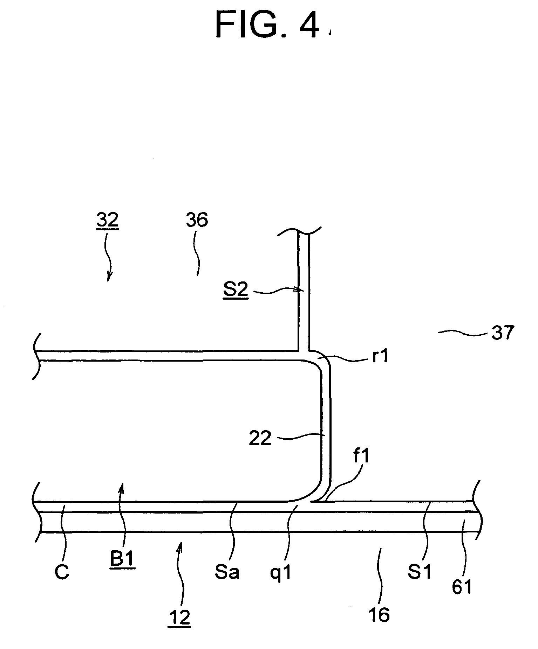

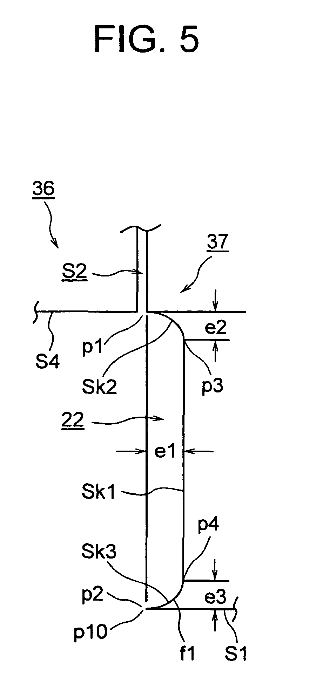

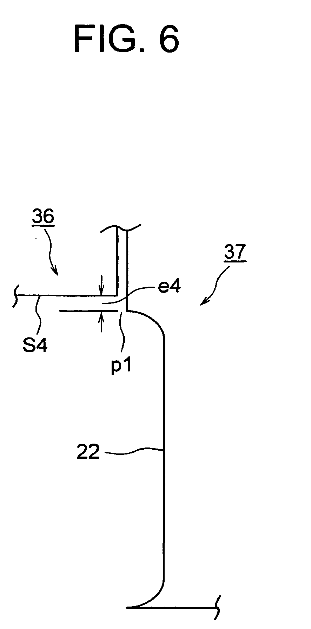

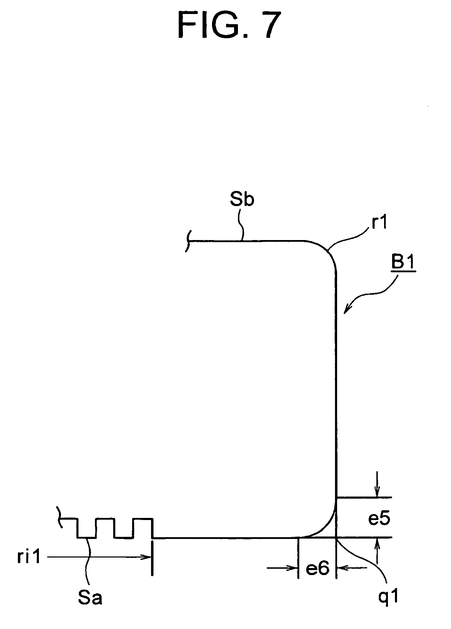

Fig. 4 is a conceptual diagram showing a disk substrate molding state according to a first embodiment of the invention. Fig. 5 is an exploded diagram showing a first main part of the disk molding mold according to the first embodiment of the invention. Fig. 6 is an exploded diagram showing a second main part of the disk molding mold according to the first embodiment of the invention. Fig. 7 is a cross-sectional view showing a main part of a disk substrate according to the first embodiment of the invention.

In the drawing, the reference numeral 12 denotes the fixed-side mold assembly, the reference numeral 32 denotes the movable-side mold assembly, the reference numerals 16 and 36 denote the disk plates, and the reference numeral 37 denotes the cavity ring. In the fixed-side mold assembly 12, the disk plate 16 is equipped with the stamper 61 for forming a minute pattern on an information surface Sa of a disk substrate B1. In addition, in the movable-side mold assembly 32, the cavity ring 37 is mounted to the disk plate 36, and the outer peripheral edge of the cavity C is formed by the cavity ring 37.

In addition, the concave portion 22 is formed at a predetermined portion of the inner peripheral surface S2 of the cavity ring 37 (in the embodiment, a portion facing the cavity C during the mold clamping operation) by cutting. A protruding portion f1 is formed in a portion of the inner peripheral surface S2 on the side of the stamper 61 so as to protrude toward the cavity C.

The surface provided with the concave portion 22 includes a bottom surface portion Sk1 which is formed from a point p1 as a first edge on the side of the disk plate 36 to a point p2 as a second edge on the side of the disk plate 16, a first displacement portion Sk2 which is formed from the bottom surface portion Sk1 toward the disk plate 36, and a second displacement portion Sk3 which is formed from the bottom surface portion Sk1 toward the mold assembly 12. In addition, the point p2 is formed at an intersection point p10 between the inner peripheral surface S2 and the front end surface S1 of the cavity ring 37.

The bottom surface portion Sk1 is parallel to the inner peripheral surface S2 and extends in the axial direction of the disk molding mold and the disk substrate B1 so as to have a plane shape having a constant depth e1 from the point p3 as the first edge on the side of the disk plate 36 to the point p4 as the second edge on the side of the disk plate 16. In addition, the first displacement portion Sk2 is formed in a predetermined shape so that a depth thereof increases from the point p1 to the point p3, and the second displacement portion Sk3 is formed in a predetermined shape so that a depth thereof increases from the point p2 to the point p4. In the embodiment, the first and second displacement portions Sk2 and Sk3 are formed in a circular-arc shape (R shape), and the tangential lines at the points p1 and p2 extend in the radial direction of the disk substrate B1. The tangential lines at the points p3 and p4 extend in the axial direction of the disk substrate B1.

In addition, the depth e1 of the bottom surface portion Sk1 of the concave portion 22 is set such that 50 ≤ e1 ≤ 150 (µm).

Further, the axial dimensions (the lengths of the displacement portions) of the first and second displacement portions Sk2 and Sk3, that is, an axial distance e2 between the points p1 and p3 and an axial distance e3 between the points p2 and p4 is set such that 0 ≤ e2 ≤ 300 (µm) and 50 ≤ e3 ≤ 300 (µm).

According to the present invention, the front end surface S4 of the disk plate 36 facing the disk plate 16 and the point p1 are located at the same position in the axial direction. As shown in Fig. 6, in a comparative example, the point p1 may be disposed closer to the disk plate 16 in the axial direction than the front end surface S4. In this case, an axial distance e4 between the front end surface S4 and the point p1 is set such that 0 ≤ e4 ≤ 100 (µm).

Further, a thickness δ of the disk substrate B1 is set such that δ ≈ 1.1 (mm).

Likewise, in the embodiment, since the concave portion 22 is formed in the inner peripheral surface S2 of the cavity ring 37, the outer peripheral edge of the cavity C protrudes in the outer radial direction by a degree corresponding to the concave portion 22. Further, since the distances e2 and e3 are sufficiently short, the volume of the concave portion 22 is large. Therefore, it is possible to increase an amount of the resin accommodated in the concave portion 22.

Accordingly, since it is possible to prevent the resin in the vicinity of the outer peripheral edge of the cavity C from being abruptly cooled, the flow layer of the resin filled in the cavity C extends in the outer radial direction by a degree in which the resin is not abruptly cooled, and the resin in the vicinity of the outer peripheral edge and the resin in other parts are solidified in the substantially same density state.

As a result, when the mold opening operation is performed and the entire disk substrate B1 is cooled, since the contraction amount of the resin in the vicinity of the outer peripheral edge of the cavity C and the contraction amount of the resin in other parts are equal to each other, the contraction difference therebetween does not occur. Accordingly, it is possible to prevent the outer peripheral edge of the disk substrate B1 from protruding in the axial direction.

In addition, a chamfered portion (a circular arc shaped portion) q1 having a shape corresponding to the shape of the first displacement portion Sk2 is formed on the side of the information surface Sa of the outer peripheral edge of the disk substrate B1. A chamfered portion (a circular arc shaped portion) r1 having a shape corresponding to the second displacement portion Sk3 is formed in a portion on the opposite side of the information surface Sa, that is, a portion on the side of a non-information surface Sb.

Accordingly, since it is possible to prevent the protruding portion from being formed in the outer peripheral edge of the disk substrate B1, it is possible to improve the quality of the optical disk.

Further, since it is not necessary to forma stepped portion on the rear surface of the stamper 61 in order to prevent the protruding portion from being formed in the outer peripheral edge of the disk substrate B1, the rear surface of the stamper 61 is not abraded due to the repeated molding operation, and hence it is possible to improve the durability of the stamper 61. As a result, it is possible to improve the durability of the disk molding mold.

Furthermore, since it is not necessary to control the temperature of the cavity ring 37 in order to prevent the protruding portion from being formed in the outer peripheral edge of the disk substrate B1, it is possible to reduce the cost of the disk molding mold.

In the case where an optical disk such as a blue-ray disk is formed by laminating a reflection film, a cover layer (light transmitting layer), and the like on the disk substrate B1, the reading head, the recording head, or the like of the AV device does not contact with the protruding portion of the optical disk when the optical disk is set on the AV device or the like to read out data therefrom or to write data therein. In addition, even when liquid is collected in the outer peripheral edge of the optical disk in the case where the cover layer is laminated by a spin coating method, the protruding portion is not formed in the optical disk.

Further, in the embodiment, since the chamfered portion q1 is formed by the second displacement portion Sk3, a height of the chamfered portion q1, that is, a chamfered portion height e5 is equal to the distance e3 such that 50 ≤ e5 ≤ 300 (µm). A width of the chamfered portion q1, that is, a chamfered portion width e6 is equal to the depth e1 such that 50 ≤ e6 ≤ 150 (µm). Accordingly, the chamfered portion q1 becomes very small. As a result, since it is possible to increase a radius ri1 of the information surface Sa by a degree corresponding to the small chamfered portion q1, it is possible to increase an amount of data recorded in the optical disk.

When the chamfered portion q1 is formed, a layer thickness of a portion distant from the chamfered portion q1 by a predetermined distance in the inner radial direction is thin in the case of forming the cover layer through a spin coating method. However, since the chamfered portion q1 is small, the layer thickness of the cover layer is ensured by a degree corresponding to the small chamfered portion q1.

Further, in the embodiment, since the contraction difference between the resin in the vicinity of the outer peripheral edge of the cavity C and the resin in other parts does not occur and the disk substrate B1 is easily separated from the stamper 61 and the disk plate 36 due to the chamfered portions q1 and r1, it is possible to prevent the disk substrate B1 from being bent in the peripheral direction. Also, since the plane degree of the disk substrate B1 is improved, it is possible to improve the quality of the optical disk.

Next, the relationship between the depth e1 of the concave portion 22 and the peripheral bent amount of the disk substrate B1 will be described.

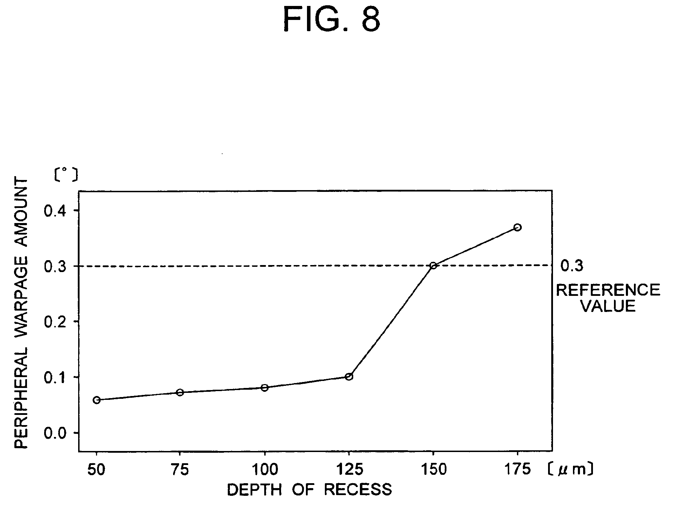

Fig. 8 is a diagram showing the relationship between the depth of the concave portion and the peripheral bent amount of the disk substrate according to the first embodiment of the invention. In addition, in the drawing, the horizontal axis indicates the depth e1 of the concave portion 22, and the vertical axis indicates the peripheral bent amount.

In this case, the peripheral bent amount of the disk substrate B1 is measured by changing the depth e1. In addition, the PROmeteus made by Dr. schenk is used as a measuring device.

As shown in the drawing, when the upper limit, that is, the reference value of the peripheral bent amount of the disk substrate B1 for preventing the deterioration in the quality of the optical disk is 0.3 (°) and the depth e1 is set such that e1 > 150 (µm), since a dragging resistance of the cavity ring 37 is caused by a friction between the outer peripheral surface of the disk substrate B1 and the inner peripheral surface S2 of the cavity ring 37 upon separating the disk substrate B1 from the disk plate 36, the peripheral bent amount increases. On the contrary, when the depth e1 is set such that e1 ≤ 150 (µm), it is possible to obtain the bent amount not more than the reference value.

Likewise, in the embodiment, since it is possible to reduce the peripheral bent amount of the disk substrate B1, it is possible to improve the plane degree of the disk substrate B1 and to improve the quality of the optical disk.

Further, since it is not possible to form the chamfered portions q1 and r1 having sufficient dimensions due to the first and second displacement portions Sk2 and Sk3 when the depth e1 is less than 50 (µm), it is desirable to set the depth e1 such that 50 (µm) ≤ e1 in order to reliably prevent the protruding portion from being formed in the outer peripheral edge of the disk substrate B1.

Next, the method of molding the blue-ray disk will be described. In this case, in the blue-ray disk, a surface provided with the information surface Sa of the disk substrate B1 is set to a front surface, and a surface not provided with the information surface Sa of the disk substrate B1 is set to a rear surface.

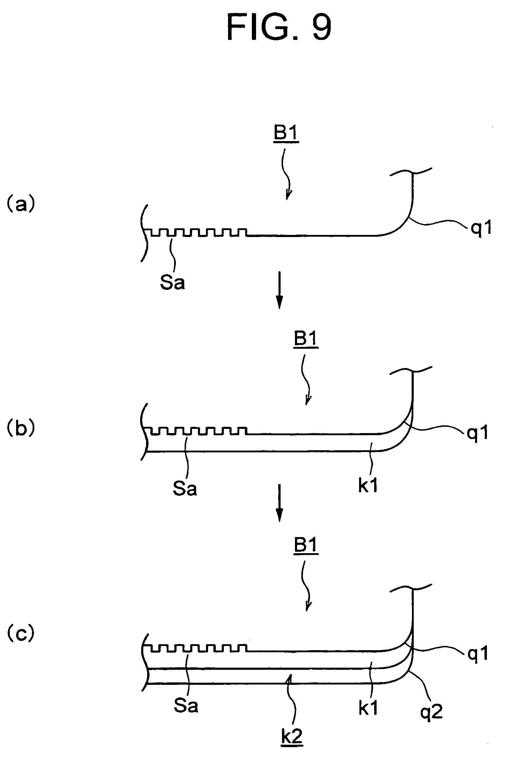

Fig. 9 is a diagram showing a method of molding the blue-ray disk according to the first embodiment of the invention.

As shown in the drawing, in the step (a), the disk substrate B1 is formed by the disk molding mold having the above-described configuration. In the step (b), a reflection film k1 made of a metallic thin film having a thickness of several tens of (µm) is formed by metal such as aluminum through a sputtering method. In the step (c), a cover layer k2 having a thickness of about 0.1 (mm) is formed by coating a sheet made of a light transmitting resin on the reflection film k1. In this way, it is possible to mold the blue-ray disk.

In this case, since the chamfered portion q1 is formed in the front surface portion of the outer peripheral edge of the disk substrate B1, a chamfered portion q2 is formed in a portion of the cover layer k2 so as to correspond to the chamfered portion q1.

Accordingly, since it is possible to prevent the protruding portion from being formed in the blue-ray disk, the reading head, the recording head, or the like of the AV device or the like does not contact with the protruding portion of the optical disk when the blue-ray disk is set on the AV device or the like to read out data therefrom or to write data therein.

In addition, since the chamfered portion q2 is formed in the outer peripheral edge of the cover layer k2 so as to cover the chamfered portion q1 of the disk substrate B1, it is possible to improve the separating strength of the cover layer k2. Further, if the protruding portion exists, generally, the outer peripheral edge of the cover layer k2 tends to be not uniform. However, in the embodiment, since the chamfered portion q1 is formed, it is possible to reliably form a non-defective product.

In addition, since it is not necessary to form the stepped portion in the rear surface of the stamper 61, the rear surface of the stamper 61 is not abraded due to the repeated molding operation, and hence it is possible to improve the durability of the stamper 61. As a result, it is possible to reduce the cost of the disk substrate B1.

In the embodiment, the cover layer k2 is formed by the sheet coating, but the cover layer k2 may be formed by coating, for example, an ultraviolet-ray curing resin through a spin coating method.

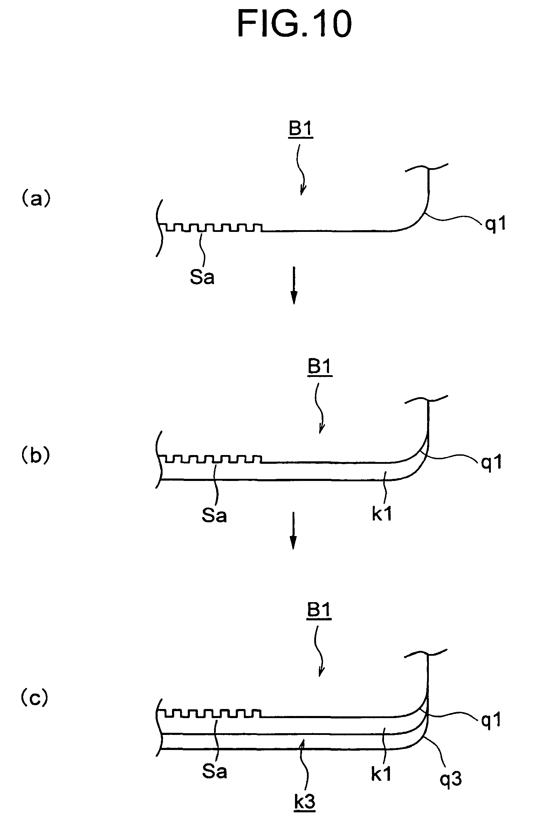

Fig. 10 is a diagram showing another method of molding the blue-ray disk according to the first embodiment of the invention.

As shown in the drawing, in the step (a), the disk substrate B1 is formed by the disk molding mold having the above-described configuration. In the step (b), a reflection film k1 made of a metallic thin film having a thickness of several tens of (µm) is formed by metal such as aluminum through a sputtering method. In the step (c), a cover layer k3 having a thickness of about 0.1 (mm) is formed by coating, for example, an ultraviolet-ray curing resin on the reflection film k1 through a spin coating method and by irradiating an ultraviolet ray thereto so as to cure the ultraviolet-ray curing resin. In this way, it is possible to mold the blue-ray disk.

In this case, since the chamfered portion q1 is formed in the front surface portion of the outer peripheral edge of the disk substrate B1, even when the resin of the ultraviolet-ray curing layer coated through a spin coating method is collected in the outer peripheral edge of the disk substrate B1, the protruding portion is not formed in the blue-ray disk because the slight chamfered portion q3 is formed in a portion of the cover layer k3 so as to correspond to the chamfered portion q1.

Next, still another method of molding the blue-ray disk as the optical disk will be described, where the blue-ray disk corresponds to a multilayer blue-ray disk.

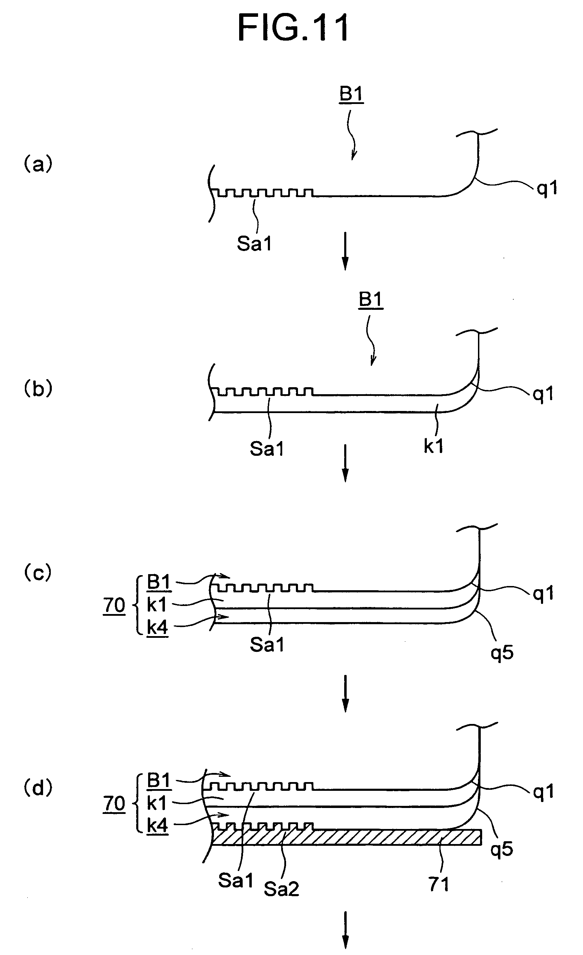

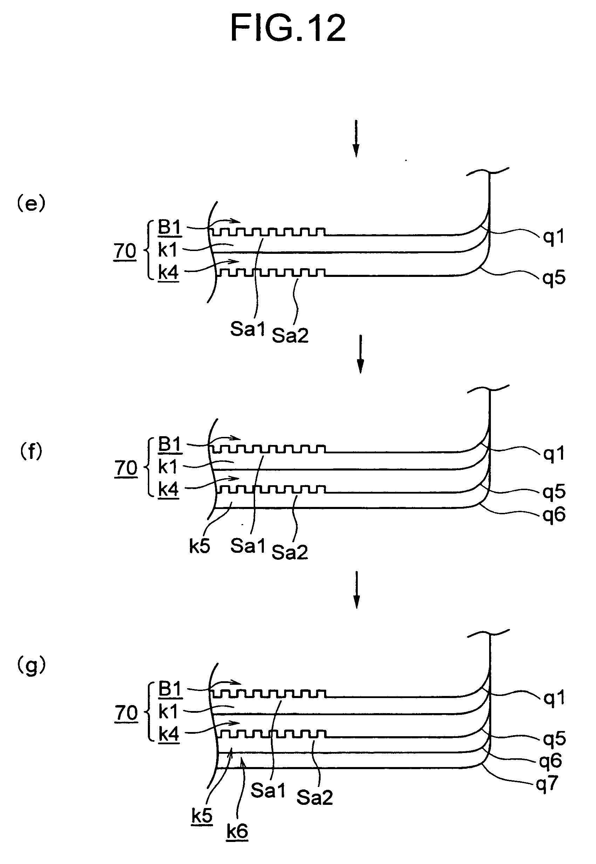

Fig. 11 is a first diagram showing still another method of molding the blue-ray disk according to the first embodiment of the invention. Fig. 12 is a second diagram showing still another method of molding the blue-ray disk according to the first embodiment of the invention.

As shown in the drawing, in the step (a), the disk substrate B1 is formed by the disk molding mold having the above-described configuration. In the step (b), a reflection film k1 made of a metallic thin film having a thickness of several tens of (µm) is formed by metal such as aluminum through a sputtering method. In the step (c), an intermediate layer k4 is formed by coating a resin having a thickness of several tens of (µm) through a spin coating method. Accordingly, a laminated body 70 including the disk substrate B1, the reflection film k1, and the intermediate layer k4 is formed.

In this case, since a first information surface Sa1 is formed in the disk substrate B1 and the chamfered portion q1 is formed in the front surface portion of the outer peripheral edge of the disk substrate B1, even when the resin coated through a spin coating method is collected in the outer peripheral edge of the disk substrate B1, a slight chamfered portion q5 is formed in a portion of the intermediate layer k4 so as to correspond to the chamfered portion q1.

Subsequently, a second information surface Sa2 is formed in the surface of the intermediate layer k4. Then, in the step (d), the surface of the intermediate layer k4 is allowed to face the stamper 71 and is pushed against the stamper 71, thereby forming a minute pattern including unevenness in the second information surface Sa2 of the intermediate layer k4.

In this case, when a slight protruding portion exists in the outer peripheral edge of the disk substrate B1, the outer peripheral edge of the reflection film k1 and the intermediate layer k4 protrude, and the protruding outer peripheral edge of the intermediate layer k4 contacts with the stamper 71. Accordingly, it is not possible to highly precisely form the minute pattern. On the contrary, in the embodiment, since it is possible to prevent the slight protruding portion from being formed in the outer peripheral edge of the disk substrate B1, it is possible to highly precisely dispose the stamper 71, and thus to reliably form the minute pattern.

Next, in the step (e), the laminated body 70 is separated from the stamper 71. At this time, since the chamfered portion q5 is formed in the front surface portion of the outer peripheral edge of the intermediate layer k4, it is possible to easily separate the laminated body 70 from the stamper 71.

In addition, since the chamfered portion q5 is formed in the outer peripheral edge of the cover layer k4 so as to cover the chamfered portion q1 of the disk substrate B1, it is possible to improve the separating strength of the cover layer k4, and thus to prevent the cover layer k4 from being separated from the reflection film k1 upon separating the stamper 71 from the laminated body 70.

Subsequently, in the step (f), a half-reflection film k5 made of a metallic thin film thinner than the reflection film k1 is formed by metal such as aluminum through a sputtering method. At this time, since the chamfered portion q5 is formed in the front surface portion of the outer peripheral edge of the intermediate layer k4, a slight chamfered portion (a circular arc portion) q6 is formed in a portion of the half-reflection film k5 so as to correspond to the chamfered portion q5.

Then, in the step (g), a cover layer k6 having a thickness of about 0.1 (mm) is formed by coating, for example, an ultraviolet-ray curing resin on the half-reflection film k5 through a spin coating method and by irradiating an ultraviolet ray thereto so as to cure the ultraviolet-ray curing resin. In this way, it is possible to mold the blue-ray disk.

In this case, since the chamfered portion q6 is formed in the front surface portion of the outer peripheral edge of the half-reflection film k5, even when the resin of the ultraviolet-ray curing layer coated through a spin coatingmethod is collected in the outer peripheral edge of the half-reflection film k5, the protruding portion is not formed in the blue-ray disk because a slight chamfered portion (a circular arc portion) q7 is formed in a portion of the cover layer k6 so as to correspond to the chamfered portion q6.

Next, a comparative example will be described. In addition, the same reference numerals will be given to the constituents having the same structures as those of the first embodiment, and the advantage of the constituents having the same structures as those of the first embodiment will be incorporated herein.

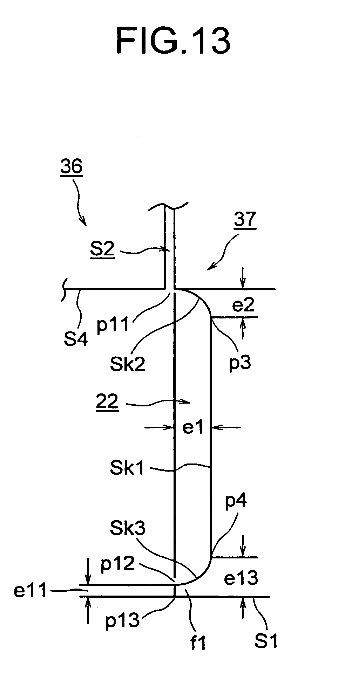

Fig. 13 is an exploded diagram showing the main part of another disk molding mold.

In this case, the surface provided with the concave portion 22 includes a bottom surface portion Sk1 which is formed from a point p11 as a first edge on the side of the disk plate 36 as a second mirror plate to a point p12 as a second edge on the side of the disk plate 16 (Fig. 4) as a first mirror plate, a first displacement portion Sk2 which is formed from the bottom surface portion Sk1 toward the disk plate 36, and a second displacement portion Sk3 which is formed from the bottom surface portion Sk1 toward the mold assembly 12 as the first mold. In addition, the point p12 is formed at a position distant by a distance e11 toward the disk plate 36 from an intersection point p13 between the inner peripheral surface S2 and the front end surface S1 of the cavity ring 37 as the outer peripheral ring.

The bottom surface portion Sk1 is parallel to the inner peripheral surface S2 and extends in the axial direction of the disk substrate B1 so as to have a plane shape having a constant depth e1 from the point p3 as the first edge on the side of the disk plate 36 to the point p4 as the second edge on the side of the disk plate 16. In addition, the first displacement portion Sk2 is formed in a predetermined shape so that a depth thereof increases from the point p11 to the point p3, and the second displacement portion Sk3 is formed in a predetermined shape so that a depth thereof increases from the point p12 to the point p4. In the embodiment, the first and second displacement portions Sk2 and Sk3 are formed in a circular-arc shape, the tangential lines at the points p11 and p12 extend in the radial direction of the disk substrate B1. The tangential lines at the points p3 and p4 extend in the axial direction of the disk substrate B1.

The depth e1 of the bottom surface portion Sk1 of the concave portion 22 is set such that 50 ≤ e1 ≤ 150 (µm).

Further, the axial dimensions (the lengths of the displacement portions) of the first and second displacement portions Sk2 and Sk3, that is, an axial distance e2 between the points p11 and p3 and an axial distance e13 between the points p13 and p4 is set such that 0 ≤ e2 ≤ 300 (µm) and 50 ≤ e13 ≤ 300 (µm).

The distance e11 is set such that 0 < e11 ≤ 100 (µm).

In the above-described embodiments, the stamper 61 is disposed on the side of the mold assembly 12, but may be disposed on the side of the mold assembly 32. In this case, the inner stamper holder, the abutting ring, the spacer holding ring, and the like are disposed on the side of the mold assembly 32, and the cavity ring and the like are disposed on the side of the mold assembly 12.

## Claims

1. A disk molding mold comprising:
(a) a first mirror plate (16);
(b) a second mirror plate (36) which is disposed so as to be movable in a reciprocating manner relative to the first mirror plate (16);
(c) a stamper (61) which is mounted to one mirror plate of the first and second mirror plates; and
(d) an outer peripheral ring (37) which is mounted to the other mirror plate so as to face the one mirror plate and has an end surface of an inner peripheral edge forming a cavity (C), wherein
(e) a concave portion (22) having a depth in the range of 50 µm to 150 µm is formed in a portion of an inner peripheral surface (S2) of the outer peripheral ring (37) forming the cavity (C); and
(f) the concave portion (22) includes a bottom surface portion (Sk1) which is formed in a plane shape having a constant depth (e1), a first displacement portion (Sk2) which is formed from the bottom surface portion (Sk1) toward the other mirror plate, and a second displacement portion (Sk3) which is formed from the bottom surface portion (Sk1) toward the one mirror plate;
**characterized in that**:
(g) the first and second displacement portions (Sk2, Sk3) are formed in a circular-arc shape so that a depth of the first and second displacements portion (Sk2, Sk3) increases toward the bottom surface portion (Sk1);
(h) the beginning (p2) of the second displacement portion (Sk3) is the end and peak point (p10) of the inner peripheral surface (S2) of the outer peripheral ring (37); and
(i) the beginning (p1) of the first displacement portion (Sk2) is in line with the surface (S4) of the first mirror plate (36).

2. The disk molding mold according to claim 1, wherein
(a) the outer peripheral ring (37) includes a contact surface (S1) which is formed to face the one mirror plate, and
(b) an edge of the concave portion (22) on the side of the one mirror plate is formed at an intersection point (p10) between the contact surface (S1) and the inner peripheral surface (S2) of the outer peripheral ring (37).

3. The disk molding mold according to claim 1, wherein an axial dimension of the second displacement portion (Sk3) is in the range of 50 µm to 300 µm.

4. The disk molding mold according to claim 1, wherein an axial dimension of the first displacement portion (Sk2) is in the range of 0 µm to 300 µm.

5. The disk molding mold according to claim 1, wherein
(a) the outer peripheral ring (37) includes a contact surface (S1) which is formed to face the one mirror plate, and
(b) an edge of the concave portion (22) on the side of the one mirror plate is formed at a position distant by a distance more than 0 µm and not more than 100 µm toward the other mirror plate from an intersection point (p10) between the contact surface (S1) and the inner peripheral surface (S2) of the outer peripheral ring (37).

6. The disk molding mold according to claim 1,
wherein an axial distance from a front end surface of the other mirror plate to an edge of the concave portion (22) on the side of the other mirror plate is in the range of 0 µm to 100 µm.

7. An outer peripheral ring (37) which is used in a disk molding mold including a first mirror plate (16), a second mirror plate (36) disposed so as to be movable in a reciprocating manner relative to the first mirror plate (16), and a stamper (61) mounted to one mirror plate of the first and second mirror plates, and which is mounted to the other mirror plate so as to face the one mirror plate and has an end surface of an inner peripheral edge forming a cavity (C),
wherein
(a) a concave portion (22) having a depth in the range of 50 µm to 150 µm is formed in a portion of an inner peripheral surface (S2) of the outer peripheral ring (37) forming the cavity (C); and
(b) the concave portion (22) includes a bottom surface portion (Sk1) which is formed in a plane shape having a constant depth (e1), a first displacement portion (Sk2) which is formed from the bottom surface portion (Sk1) toward the other mirror plate, and a second displacement portion (Sk3) which is formed from the bottom surface portion (Sk1) toward the one mirror plate;
**characterized in that**:
(c) the first and second displacement portions (Sk2, Sk3) are formed in a circular-arc shape so that a depth of the first and second displacements portion (Sk2, Sk3) increases toward the bottom surface portion (Sk1);
(d) the beginning (p2) of the second displacement portion (Sk3) is the end and peak point (p10) of the inner peripheral surface (S2) of the outer peripheral ring (37); and
(e) the beginning (p1) of the first displacement portion (Sk2) is in line with the surface (S4) of the first mirror plate (36).

8. A disk substrate (B1) which is formed by a disk molding mold including a first mirror plate (16), a second mirror plate (36) disposed so as to be movable in a reciprocating manner relative to the first mirror plate (16), a stamper (61) mounted to one mirror plate of the first and second mirror plates, and an outer peripheral ring (37) mounted to the other mirror plate so as to face the one mirror plate and having an end surface of an inner peripheral edge forming a cavity (C), a concave portion (22) having a depth in the range of 50 µm to 150 µm being formed in a portion of an inner peripheral surface (S2) of the outer peripheral ring (37) forming the cavity (C), the concave portion (22) including a bottom surface portion (Sk1) formed in a plane shape having a constant depth (e1), a first displacement portion (Sk2) formed from the bottom surface portion (Sk1) toward the other mirror plate, and a second displacement portion (Sk3) formed from the bottom surface portion (Sk1) toward the one mirror plate, **characterized in that**:
the first and second displacement portions (Sk2, Sk3) are formed in a circular-arc shape so as to have a depth of the first and second displacements portion (Sk2, Sk3) increasing toward the bottom surface portion (Sk1);
the beginning (p2) of the second displacement portion (Sk3) is the end and peak point (p10) of the inner peripheral surface (S2) of the outer peripheral ring (37);
the beginning (p1) of the first displacement portion (Sk2) is in line with the surface (S4) of the first mirror plate (36); and
a chamfered portion (q1) is formed in an outer peripheral edge of the disk substrate (B1) so as to correspond to the concave portion (22).

9. A method of molding a disk substrate (B1) which is formed by a disk molding mold including a first mirror plate (16), a second mirror plate (36) disposed so as to be movable in a reciprocating manner relative to the first mirror plate (16), a stamper (61) mounted to one mirror plate of the first and second mirror plates, and an outer peripheral ring (37) mounted to the other mirror plate so as to face the one mirror plate and having an end surface of an inner peripheral edge forming a cavity (C), a concave portion (22) having a depth in the range of 50 µm to 150 µm being formed in a portion of an inner peripheral surface (S2) of the outer peripheral ring (37) forming the cavity (C), the concave portion (22) including a bottom surface portion (Sk1) formed in a plane shape having a constant depth (e1), a first displacement portion (Sk2) formed from the bottom surface portion (Sk1) toward the other mirror plate, and a second displacement portion (Sk3) formed from the bottom surface portion (Sk1) toward the one mirror plate, **characterized in that**:
the first and second displacement portions (Sk2, Sk3) are formed in a circular-arc shape so as to have a depth of the first and second displacements portion (Sk2, Sk3) increasing toward the bottom surface portion (Sk1);
the beginning (p2) of the second displacement portion (Sk3) is the end and peak point (p10) of the inner peripheral surface (S2) of the outer peripheral ring (37); and
the beginning (p1) of the first displacement portion (Sk2) is in line with the surface (S4) of the first mirror plate (36);
the method comprising:
forming a chamfered portion (q1) in an outer peripheral edge of the disk substrate (B1) so as to correspond to the concave portion (22).

## Patentansprüche

1. Scheibenformgebungsform, die Folgendes aufweist:
(a) eine erste Spiegelplatte (16);
(b) eine zweite Spiegelplatte (36), die so angeordnet ist, dass sie in hin und her bewegbarer Weise relativ zur ersten Spiegelplatte (16) bewegbar ist;
(c) einen Stempel (61), der an einer Spiegelplatte befestigt ist, d.h. der ersten oder der zweiten Spiegelplatte; und
(d) einen Außenumfangsring (37), der an der anderen Spiegelplatte befestigt ist, so dass er zu der einen Spiegelplatte hinweist, und der eine Endfläche einer Innenumfangskante aufweist, die einen Hohlraum (C) bildet,
(e) einen konkaven Teil (22) mit einer Tiefe im Bereich vom 50 µm bis 150 µm in einem Teil einer Innenumfangsfläche (S2) des Außenumfangsrings (37) geformt ist, der den Hohlraum (C) formt; und
(f) wobei der konkave Teil (22) einen Unterseitenteil (Sk1) aufweist, der in einer ebenen Form mit einer konstanten Tiefe (e1) geformt ist, einen ersten Verdrängungsteil (Sk2), der von dem Unterseitenteil (Sk1) zur anderen Spiegelplatte hin ausgeformt ist, und einen zweiten Verdrängungsteil (Sk3), der vom Unterseitenteil (Sk1) zur anderen Spiegelplatte hin geformt ist;
**dadurch gekennzeichnet, dass**
(g) die ersten und zweiten Verdrängungsteile (Sk2, Sk3) in einer Kreisbogenform geformt sind, so dass eine Tiefe der ersten und zweiten Verdrängungsteile (Sk2, Sk3) zum Unterseitenteil (Sk1) hin zunimmt;
(h) der Beginn (p2) des zweiten Verdrängungsteils (Sk3) der End- und Spitzenpunkt (p10) der Innenumfangsfläche (S2) des Außenumfangsrings (37) ist; und
(i) der Beginn (p1) des ersten Verdrängungsteils (Sk2) in einer Linie mit der Oberfläche (S4) der ersten Spiegelplatte (36) ist.

2. Scheibenformgebungsform nach Anspruch 1,
(a) wobei der Außenumfangsring (37) eine Kontaktfläche (S1) aufweist, die so ausgeformt ist, dass sie zu der einen Spiegelplatte hinweist; und
(b) wobei eine Kante des konkaven Teils (22) auf der Seite der einen Spiegelplatte an einem Schnittpunkt (p10) zwischen der Kontaktfläche (S1) und der Innenumfangsfläche (S2) des Außenumfangsrings (37) ausgeformt ist.

3. Scheibenformgebungsform nach Anspruch 1, wobei eine axiale Abmessung des zweiten Verdrängungsteils (Sk3) im Bereich von 50 µm bis 300 µm liegt.

4. Scheibenformgebungsform nach Anspruch 1, wobei eine axiale Abmessung des ersten Verdrängungsteils (Sk2) im Bereich von 0 µm bis 300 µm liegt.

5. Scheibenformgebungsform nach Anspruch 1,
(a) wobei der Außenumfangsring (37) eine Kontaktfläche (S1) aufweist, die so geformt ist, dass sie zu der einen Spiegelplatte hinweist, und
(b) wobei eine Kante des konkaven Teils (22) an der Seite der einen Spiegelplatte an einer Position geformt ist, die um einen Distanz von mehr als 0 µm und nicht mehr als 100 µm zu der anderen Spiegelplatte von einem Schnittpunkt (p10) zwischen der Kontaktfläche (S1) und der Innenumfangsfläche (S2) des Außenumfangsrings (37) liegt.

6. Scheibenformgebungsform nach Anspruch 1, wobei eine axiale Distanz von einer Vorderendseite der anderen Spiegelplatte zu einer Kante des konkaven Teils (22) auf der Seite der anderen Spiegelplatte im Bereich von 0 µm bis 100 µm liegt.

7. Außenumfangsring (37), der in einer Scheibenformgebungsform verwendet wird, welche Folgendes aufweist: eine erstes Spiegelplatte (16); eine zweite Spiegelplatte (36), die so angeordnet ist, dass sie in hin und her bewegbarer Weise relativ zur ersten Spiegelplatte (16) bewegbar ist; einen Stempel (61), der an einer Spiegelplatte befestigt ist, d.h. der ersten oder der zweiten Spiegelplatte; und an der anderen Spiegelplatte befestigt ist, so dass er zu der einen Spiegelplatte hinweist, und der eine Endfläche einer Innenumfangskante aufweist, die einen Hohlraum (C) bildet, wobei
(a) ein konkaver Teil (22) mit einer Tiefe im Bereich vom 50 µm bis 150 µm in einem Teil einer Innenumfangsfläche (S2) des Außenumfangsrings (37) geformt ist, der den Hohlraum (C) formt; und
(b) der konkave Teil (22) einen Unterseitenteil (Sk1) aufweist, der in einer ebenen Form mit einer konstanten Tiefe (e1) geformt ist, einen ersten Verdrängungsteil (Sk2), der von dem Unterseitenteil (Sk1) zur anderen Spiegelplatte hin ausgeformt ist, und einen zweiten Verdrängungsteil (Sk3), der vom Unterseitenteil (Sk1) zur anderen Spiegelplatte hin geformt ist;
**dadurch gekennzeichnet, dass**
(c) die ersten und zweiten Verdrängungsteile (Sk2, Sk3) in einer Kreisbogenform geformt sind, so dass eine Tiefe der ersten und zweiten Verdrängungsteile (Sk2, Sk3) zum Unterseitenteil (Sk1) hin zunimmt;
(d) der Beginn (p2) des zweiten Verdrängungsteils (Sk3) der End- und Spitzenpunkt (p10) der Innenumfangsfläche (S2) des Außenumfangsrings (37) ist; und
(e) der Beginn (p1) des ersten Verdrängungsteils (Sk2) in einer Linie mit der Oberfläche (S4) der ersten Spiegelplatte (36) ist.

8. Scheibensubstrat (B1), welches von einer Scheibenformgebungsform geformt wird, die Folgendes aufweist: eine erstes Spiegelplatte (16); eine zweite Spiegelplatte (36), die so angeordnet ist, dass sie in hin und her bewegbarer Weise relativ zur ersten Spiegelplatte (16) bewegbar ist; einen Stempel (61), der an einer Spiegelplatte befestigt ist, d.h. der ersten oder der zweiten Spiegelplatte; und einen Außenumfangsring (37), der an der anderen Spiegelplatte befestigt ist, so dass er zu der einen Spiegelplatte hinweist, und der eine Endfläche einer Innenumfangskante aufweist, die einen Hohlraum (C) bildet, einen konkaven Teil (22) mit einer Tiefe im Bereich vom 50 µm bis 150 µm in einem Teil einer Innenumfangsfläche (S2) des Außenumfangsrings (37) geformt ist, der den Hohlraum (C) formt; wobei der konkave Teil (22) einen Unterseitenteil (Sk1) aufweist, der in einer ebenen Form mit einer konstanten Tiefe (e1) geformt ist, einen ersten Verdrängungsteil (Sk2), der von dem Unterseitenteil (Sk1) zur anderen Spiegelplatte hin ausgeformt ist, und einen zweiten Verdrängungsteil (Sk3), der vom Unterseitenteil (Sk1) zur anderen Spiegelplatte hin geformt ist;
**dadurch gekennzeichnet, dass**
die ersten und zweiten Verdrängungsteile (Sk2, Sk3) in einer Kreisbogenform geformt sind, so dass eine Tiefe der ersten und zweiten Verdrängungsteile (Sk2, Sk3) zum Unterseitenteil (Sk1) hin zunimmt;
der Beginn (p2) des zweiten Verdrängungsteils (Sk3) der End- und Spitzenpunkt (p10) der Innenumfangsfläche (S2) des Außenumfangsrings (37) ist; und
der Beginn (p1) des ersten Verdrängungsteils (Sk2) in einer Linie mit der Oberfläche (S4) der ersten Spiegelplatte (36) ist; und
wobei ein Fasenteil (q1) an einer Außenumfangskante des Scheibensubstrates (B1) ausgeformt ist, so dass es dem konkaven Teil (22) entspricht.

9. Verfahren zum Formen eines Scheibensubstrates (B1), welches von einer Scheibenformgebungsform geformt wird, die Folgendes aufweist: eine erstes Spiegelplatte (16); eine zweite Spiegelplatte (36), die so angeordnet ist, dass sie in hin und her bewegbarer Weise relativ zur ersten Spiegelplatte (16) bewegbar ist; einen Stempel (61), der an einer Spiegelplatte befestigt ist, d.h. der ersten oder der zweiten Spiegelplatte; und einen Außenumfangsring (37), der an der anderen Spiegelplatte befestigt ist, so dass er zu der einen Spiegelplatte hinweist, und der einen Endfläche einer Innenumfangskante aufweist, die einen Hohlraum (C) bildet, einen konkaven Teil (22) mit einer Tiefe im Bereich vom 50 µm bis 150 µm in einem Teil einer Innenumfangsfläche (S2) des Außenumfangsrings (37) geformt ist, der den Hohlraum (C) formt; wobei der konkave Teil (22) einen Unterseitenteil (Sk1) aufweist, der in einer ebenen Form mit einer konstanten Tiefe (e1) geformt ist, einen ersten Verdrängungsteil (Sk2), der von dem Unterseitenteil (Sk1) zur anderen Spiegelplatte hin ausgeformt ist, und einen zweiten Verdrängungsteil (Sk3), der vom Unterseitenteil (Sk1) zur anderen Spiegelplatte hin geformt ist;
**dadurch gekennzeichnet, dass**
die ersten und zweiten Verdrängungsteile (Sk2, Sk3) in einer Kreisbogenform geformt sind, so dass eine Tiefe der ersten und zweiten Verdrängungsteile (Sk2, Sk3) zum Unterseitenteil (Sk1) hin zunimmt;
der Beginn (p2) des zweiten Verdrängungsteils (Sk3) der End- und Spitzenpunkt (p10) der Innenumfangsfläche (S2) des Außenumfangsrings (37) ist; und
der Beginn (p1) des ersten Verdrängungsteils (Sk2) in einer Linie mit der Oberfläche (S4) der ersten Spiegelplatte (36) ist;
wobei das Verfahren Folgendes aufweist:
Formen eines Fasenteils (q1) in einer Außenumfangskante des Scheibensubstrates (B1), so dass es dem konkaven Teil (22) entspricht.

## Revendications

1. Moule de moulage de disque comprenant :
(a) une première plaque de miroir (16) ;
(b) une deuxième plaque de miroir (36) disposée de façon à être mobile en va-et-vient par rapport à la première plaque de miroir (16) ;
(c) un poinçon (61) monté sur l'une des première et deuxième plaques de miroir ; et
(d) un anneau périphérique extérieur (37) monté sur l'autre plaque de miroir de façon à faire face à ladite une des plaques de miroir et ayant une surface d'extrémité d'un bord périphérique intérieur formant une cavité (C), dans lequel
(e) une portion concave (22) ayant une profondeur comprise entre 50 µm et 150 µm est formée dans une portion d'une surface périphérique intérieure (S2) de l'anneau périphérique extérieur (37) formant la cavité (C) ; et
(f) la portion concave (22) comprend une portion de surface inférieure (Sk1) ayant une forme plane ayant une profondeur constante (e1), une première portion de déplacement (Sk2) formée à partir de la portion de surface inférieure (Sk1) en direction de l'autre plaque de miroir, et une deuxième portion de déplacement (Sk3) formée à partir de la portion de surface inférieure (Sk1) en direction de ladite une des plaques de miroir ;
**caractérisé en ce que** :
(g) les première et deuxième portions de déplacement (Sk2, Sk3) ont une forme d'arc circulaire de sorte que la profondeur des première et deuxième portions de déplacement (Sk2, Sk3) augmente en direction de la portion de surface inférieure (Sk1) ;
(h) le début (p2) de la deuxième portion de déplacement (Sk3) est le point de fin et de pointe (p10) de la surface périphérique intérieure (S2) de l'anneau périphérique extérieur (37) ; et
(i) le début (p1) de la première portion de déplacement (Sk2) est aligné avec la surface (S4) de la première plaque de miroir. (36).

2. Moule de moulage de disque selon la revendication 1, dans lequel :
(a) l'anneau périphérique extérieur (37) comprend une surface de contact (S1) qui est formée de façon à faire face à ladite une des plaques de miroir, et
(b) un bord de la portion concave (22) sur le côté de ladite une des plaques de miroir est formé au niveau d'un point d'intersection (p10) entre la surface de contact (S1) et la surface périphérique intérieure (S2) de l'anneau périphérique extérieur (37).

3. Moule de moulage de disque selon la revendication 1, dans lequel une dimension axiale de la deuxième portion de déplacement (Sk3) est comprise entre 50 µm et 300 µm.

4. Moule de moulage de disque selon la revendication 1, dans lequel une dimension axiale de la première portion de déplacement (Sk2) est comprise entre 0 µm et 300 µm.

5. Moule de moulage de disque selon la revendication 1, dans lequel :
(a) l'anneau périphérique extérieur (37) comprend une surface de contact (S1) qui est formée de façon à faire face à ladite une des plaques de miroir, et
(b) un bord de la portion concave (22) sur le côté de ladite une des plaques de miroir est formé à une position distante d'une distance supérieure à 0 µm et pas supérieure à 100 µm en direction de l'autre plaque de miroir à partir d'un point d'intersection (p10) entre la surface de contact (S1) et la surface périphérique intérieure (S2) de l'anneau périphérique extérieur (37).

6. Moule de moulage de disque selon la revendication 1,
dans lequel une distance axiale entre une surface d'extrémité frontale de l'autre plaque de miroir et un bord de la portion concave (22) sur le côté de l'autre plaque de miroir est comprise entre 0 µm et 100 µm.

7. Anneau périphérique extérieur (37) qui est utilisé dans un moule de moulage de disque comprenant une première plaque de miroir (16), une deuxième plaque de miroir (36) disposée de façon à être mobile en va-et-vient par rapport à la première plaque de miroir (16), et un poinçon (61) monté sur l'une des première et deuxième plaques de miroir, et qui est monté sur l'autre plaque de miroir de façon à faire face à ladite une des plaques de miroir et a une surface d'extrémité d'un bord périphérique intérieur formant une cavité (C),
dans lequel
(a) une portion concave (22) ayant une profondeur comprise entre 50 µm et 150 µm est formée dans une portion d'une surface périphérique intérieure (S2) de l'anneau périphérique extérieur (37) formant la cavité (C) ; et
(b) la portion concave (22) comprend une portion de surface inférieure (Sk1) ayant une forme plane ayant une profondeur constante (e1), une première portion de déplacement (Sk2) qui est formée à partir de la portion de surface inférieure (Sk1) en direction de l'autre plaque de miroir, et une deuxième portion de déplacement (Sk3) qui est formée à partir de la portion de surface inférieure (Sk1) en direction de ladite une des plaques de miroir ;
**caractérisé en ce que** :
(c) les première et deuxième portions de déplacement (Sk2, Sk3) ont une forme d'arc circulaire de sorte qu'une profondeur des première et deuxième portions de déplacement (Sk2, Sk3) augmente en direction de la portion de surface inférieure (Sk1) ;
(d) le début (p2) de la deuxième portion de déplacement (Sk3) est le point de fin et de pointe (p10) de la surface périphérique intérieure (S2) de l'anneau périphérique extérieur (37) ; et
(e) le début (p1) de la première portion de déplacement (Sk2) est aligné avec la surface (S4) de la première plaque de miroir. (36).

8. Substrat de disque (B1) qui est formé par un moule de moulage de disque comprenant une première plaque de miroir (16), une deuxième plaque de miroir (36) disposée de façon à être mobile en va-et-vient par rapport à la première plaque de miroir (16), un poinçon (61) monté sur l'une des première et deuxième plaques de miroir, et un anneau périphérique extérieur (37) monté sur l'autre plaque de miroir de façon à faire face à la première plaque de miroir et ayant une surface d'extrémité d'un bord périphérique intérieur formant une cavité (C), une portion concave (22) ayant une profondeur comprise entre 50 µm et 150 µm formée dans une portion d'une surface périphérique intérieure (S2) de l'anneau périphérique extérieur (37) formant la cavité (C), la portion concave (22) comprenant une portion de surface inférieure (Sk1) ayant une forme plane ayant une profondeur constante (e1), une première portion de déplacement (Sk2) formée à partir de la portion de surface inférieure (Sk1) en direction de l'autre plaque de miroir, et une deuxième portion de déplacement (Sk3) formée à partir de la portion de surface inférieure (Sk1) en direction de ladite une des plaques de miroir, **caractérisé en ce que** :
les première et deuxième portions de déplacement (Sk2, Sk3) ont une forme d'arc circulaire de façon à avoir une profondeur des première et deuxième portions de déplacement (Sk2, Sk3) augmentant en direction de la portion de surface inférieure (Sk1) ;
le début (p2) de la deuxième portion de déplacement (Sk3) est le point de fin et de pointe (p10) de la surface périphérique intérieure (S2) de l'anneau périphérique extérieur (37) ;
le début (p1) de la première portion de déplacement (Sk2) est aligné avec la surface (S4) de la première plaque de miroir (36) ; et
une portion chanfreinée (q1) est formée dans un bord périphérique extérieur du substrat de disque (B1) de façon à correspondre à la portion concave (22).

9. Procédé pour mouler un substrat de disque (B1) qui est formé par un moule de moulage de disque comprenant une première plaque de miroir (16), une deuxième plaque de miroir (36) disposée de façon à être mobile en va-et-vient par rapport à la première plaque de miroir (16), un poinçon (61) monté sur l'une des première et deuxième plaques de miroir, et un anneau périphérique extérieur (37) monté sur l'autre plaque de miroir de façon à faire face à la première plaque de miroir et ayant une surface d'extrémité d'un bord périphérique intérieur formant une cavité (C), une portion concave (22) ayant une profondeur comprise entre 50 µm et 150 µm formée dans une portion d'une surface périphérique intérieure (S2) de l'anneau périphérique extérieur (37) formant la cavité (C), la portion concave (22) comprenant une portion de surface inférieure (Sk1) ayant une forme plane ayant une profondeur constante (e1), une première portion de déplacement (Sk2) formée à partir de la portion de surface inférieure (Sk1) en direction de l'autre plaque de miroir, et une deuxième portion de déplacement (Sk3) formée à partir de la portion de surface inférieure (Sk1) en direction de ladite une des plaques de miroir, **caractérisé en ce que** :
les première et deuxième portions de déplacement (Sk2, Sk3) ont une forme d'arc circulaire de façon à avoir une profondeur des première et deuxième portions de déplacement (Sk2, Sk3) augmentant en direction de la portion de surface inférieure (Sk1) ;
le début (p2) de la deuxième portion de déplacement (Sk3) est le point de fin et de pointe (p10) de la surface périphérique intérieure (S2) de l'anneau périphérique extérieur (37) ;
le début (p1) de la première portion de déplacement (Sk2) est aligné avec la surface (S4) de la première plaque de miroir (36) ;
le procédé comprenant :
former une portion chanfreinée (q1) dans un bord périphérique extérieur du substrat de disque (B1) de façon à correspondre à la portion concave (22).
